# EUROPEAN PATENT APPLICATION

(11) **EP 0 905 504 A1**
(43) Date of publication of application: **31.03.1999**
(21) Application number: 98909498.2
(22) Date of filing: 18.03.1998
(51) Int. Cl.: G01N 9/00

(54) **APPARATUS FOR DETERMINING THE MASS AND THE DENSITY**

(30) Priority: 18.03.1997 ES 9700574; 18.03.1997 ES 9800587
(71) Applicant: UNIVERSIDAD COMPLUTENSE DE MADRID, E-28040 Madrid (ES)
(72) Inventor: TARDAJOS RODRIGUEZ, Gloria Facultad de Ciencias, E-28040 Madrid (ES); HERRERO ALVAREZ, Jose Facultad de Ciencias, E-28040 Madrid (ES); GONZALEZ GAITANO, Gustavo Facultad de Ciencias, E-28040 Madrid (ES)
(74) Representative: Carpintero Lopez, Francisco
(86) International application number: ES9800066
(87) International publication number: WO9841839

(57) **Abstract**

An electromechanical device to sustain the oscillations of a vibrant mass useful for applications where it is necessary to know the mass and /or the density is described . A metallic or metalized tube, electrically conductive in all its length, in presence of a magnetic field performs, via an special designed circuit, the drive and the detection of the vibrations, avoiding the presence of additional elements of excitation or detection attached to the util part of the tube (vibrant part). To obtain this effect, it has been necessary to develop adequate circuits of detection, amplification, and control of the amplitude. The developed electronic design permits to amplify only the electric signal due to the vibration of the mechanical resonator, and to use this signal to maintain the vibration. This, together with the use of a very precise oscillation amplitude control, produces sinusoidal vibrations, completely free of harmonics.

## Description

### OBJECT OF THE INVENTION

As stated in the title of this descriptive report this invention consists of an apparatus for the determination of mass and density. It consists of an electromechanical device which permits to keep stable the oscillations of a vibrating mass, Its most important innovation is that the same vibrating element a conductor in all its extension, performs, via an special designed circuit, the drive and the detection of the vibration, avoiding the presence of additional elements of excitation or detection attached to the vibrating part. To obtain this effect, it has been necessary to develop adequate circuits of detection, amplification, and control of the amplitude. The developed electronic design permits to amplify only the electric signal due to the vibration of the mechanical resonator, and to use this signal to maintain the vibration. This, together with the use of a very precise oscillation amplitude control, produces sinusoidal vibrations, completely free of harmonics.

### BACKGROUND OF THE INVENTION

In scientific literature different proceedings to measure the density by direct or indirect ways are described. The most precise methods are those based in the relation between the mass of the system and its mechanical frequency of vibration..

Focusing our attention on the devices that use as principle of measurement the oscillation of a tube or stick, or even the diaphragm of a loudspeaker, it can be said that the sensor oscillations are sustained by one of the following means:
a) To attach to the vibrating element a small magnet inserted between two coils put face to face; one of them produces the excitation and the other the detection (Pat. Nos. DE3601085, DE3229050, DE2639985.). The receiver could be a photoelectric element as well.
b) To attach to the oscillator an small magnet, employing a coil to detect the oscillations and any other method of excitation, as is a periodical electric signal (EP NUM. PUB. OEB: 0538235).
c) To attach to the oscillator two electric wires, one of them inducing the oscillation and the other detecting it, provided the wires are within a magnetic field (Albert. H. J.; Wood, R. H. Review of Scientific Instruments. 1984, 55(4), 589).
d) To attach to the oscillator a magnet, using a magnetic guide to put the excitation and detection coils in a place different than of that or the vibrating element (SODEV Inc. Rock Forest, PQ, Canada).

Therefore, an electromechanical system that permits to use exclusively the same element as detector and receiver without being manipulated would enhance notably the performance and would simplify the manufacture of a sensor with these features.

### EXPLANATION OF THE INVENTION

The present invention consists of an a electromechanical device which allows to sustain the oscillation of a mass in its resonance frequency. Since this frequency is mass dependent, such a device would permit the measurement of mass or densities with high precision.

Compared to the methods described earlier it has the advantage, that the vibrant element (sensor) of the equipment does not need any additional elements of excitation or detection attached to it, thus avoiding any manipulation on its oscillating part.

The main parts are the own vibrating element and the electronic circuit (amplification and amplitude control).

### BRIEF DESCRIPTION OF THE FIGURES

Figure 1.- Basic outline of the mechanical part
   1) Metallic or metallized tube; 2a and 2b) Metallic blocks; 3) Magnet; E1 and E2) Excitation cables; D1 and D2) Reception cables
Figure 2.- Basic outline of the electronic circuit
   1) Metallic or metallized tube; 3) Magnet; E1 and E2) Excitation cables; D1 and D2) Reception cables; R1, R2, R3, R4, R5, R6, R7, R10, R11, R12, R13 resistors; OP)Operational Amplifier; CA) Comparator; C1) Capacitor; F) Frequency meter
Figure 3.- Sections of the mechanical part
   1) Metallic or metallized tube; 2a and 2b) Metallic blocks; 3) Magnet; E1 and E2) Excitation cables; D1 and D2) Reception cables; 4) Upper cover. 5) Metallic block; 6) Lower cover; 9) Insulating element
Figure 4.- Electronic circuit
   1) Metallic or metallized tube; 3) Magnet; E1 and E2) Excitation cables; D1 and D2) Reception cables; R1, R2, R3, R4, R5, R6, R7, R8, R9, R10, R11, R12, R13 resistors; OP) Operational Amplifier; CA) Comparator; F) Frequency meter

### DETAILED DESCRIPTION OF THE INVENTION

The instrument can be divided in two independent blocks: the mechanical part which includes the sensor, and the electronics, which includes the amplification and amplitude control circuit.

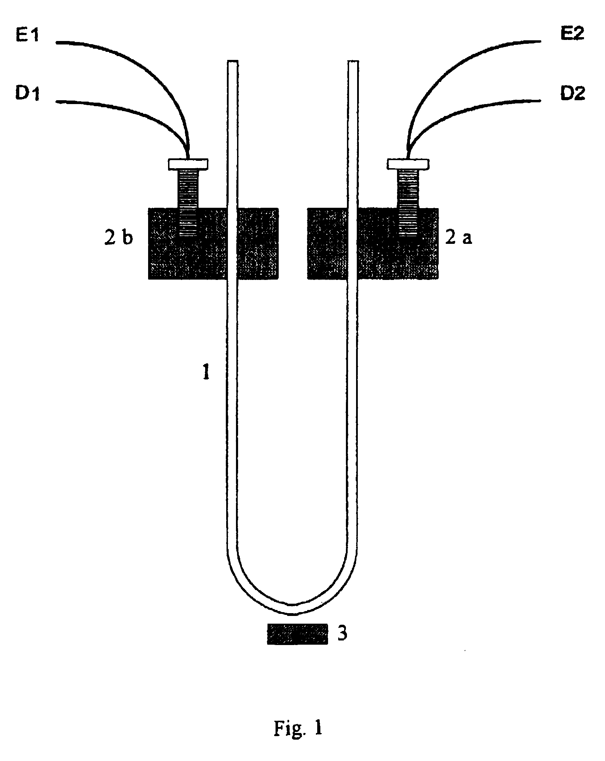

The mechanical part is shown schematically in Figure 1. The tube, metallic or metallized, can have different shapes, depending on the specific problem that must be solved. In Figure 1 an "U" shaped tube (1) with the extremes attached to two rigid blocks electrically isolated (2a y 2b) or attached to a rigid non conducting mass is represented A magnet (3) placed with a geometry that permits the sensor to cross perpendicularly the line forces of the magnetic field in its zone of maximum field is fixed at the bottom The electrical connections responsible for the excitation of the tube (cables E1 and E2) and the detection of the oscillations (D1 and D2) are firmly attached to the blocks through screws, or directly in the non vibrating part of the tube if a non conducting block is used instead of pieces 2a and 2b. Since both the excitation and the reception of the signal will be performed in an area (2a and 2b) above the vibrant part of the tube (below 2a and 2b), this vibrant part will not be perturbed which constitutes a factor of paramount importance in the quality of the resonance frequency of the sensor.

Regarding the electronics, the aim of the circuit is to sustain the natural vibrations with constant amplitude, minimum power dissipation and, at the same time, to avoid oscillations due to the electronic circuit itself and to the effect of the length of the cables, in order to achieve that only the current due to the electromotive force, induced in the tube in its vibration, be amplified in order to perform an in-phase current capable to sustain the vibration. With this circuit it is possible to sustain and detect the oscillation by using only the tube.

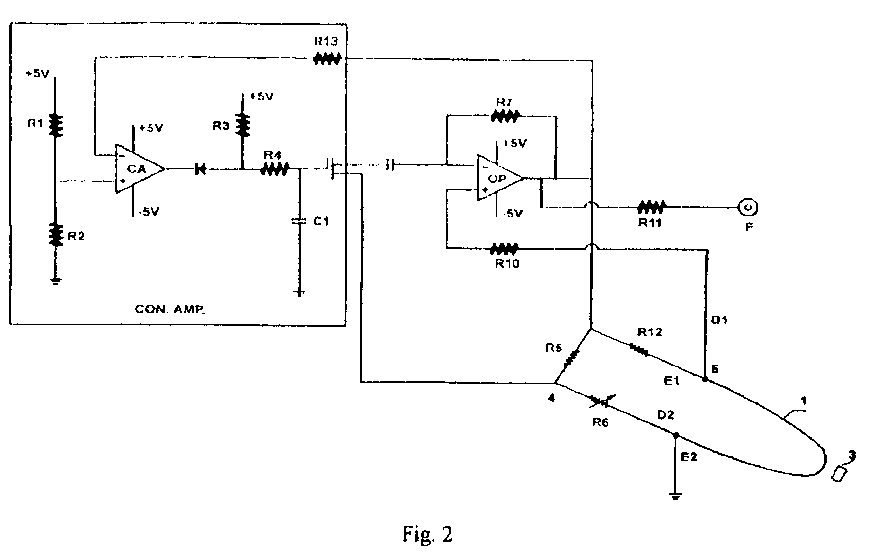

The basic outline of the circuit is shown in Figure 2. The electromotive force induced when the tube oscillates in the magnetic field is amplified to produce an in-phase current capable of sustaining the oscillation. The amplification is accomplished with an operational amplifier (OP) having high gain and low noise and being its output the excitation current, which is set to give a good signal to noise ratio and, at the same time, to keep the dissipated power in the tube at a minimum value.

The excitation and detection is achieved with a four-cable design: cables E1, E2 and D1, D2. The excitation comprises the resistor R12 and the cables E1 and E2 (ground). The detection is done through D1 and D2; where D1 is the positive feedback in phase with the excitation and D2 the reference voltage for the negative feedback of the op amp. In this way, the potential difference between the two inputs of the op amp is due only to the tube, and the effects of the length of the cables between the electronics and the sensor are avoided, thus making the mechanical part independent of the electronics.

In addition to the potential difference due to the induced electromotive force in the tube, there is another potential resulting from its resistance multiplied by the intensity of the excitation current. The latter generates a positive feedback which makes the tube vibrate with a frequency given by the electric constants of the circuit, at a frequency which has nothing to do with the mechanical resonance frequency. The undesirable component is eliminated by making the tube one of the elements of a Wheatstone bridge, consisting of R12, R5 and the variable resistor R6. The bridge can be balanced with the tube out of the magnetic field thus nulling the voltage between 4 and 5 (that is, between the inputs of the op amp). In this way, the negative and positive feedback become equal, and possible electrical oscillations generated by the circuit are avoided. Since the bridge is totally resistive, when the tube located in the magnetic field the induced electromotive force is the only signal to be amplified and this amplified signal feeds the Wheatstone bridge and therefore the vibrating element.

The amplitude control is achieved by varying the op amp gain. To do this, the non-inverting input of the op amp is simultaneously fed with the feedback resistance R7 and that of the field effect, which will have more or less resistance depending on the negative voltage of the gate. This voltage is given by a peak detector, consisting of a comparator, CA, and the diode. This circuit compares the excitation voltage of the tube (through R12) against a direct current used as reference. The amplitude control circuit has a time constant given by the capacity of C1 and the resistance of R4, which have values set beforehand to avoid any possible oscillation in the amplitude control. The reference voltage can be adjusted to minimum values, thus making negligible the level of power dissipation which is important to prevent self-heating of the tube.

The period of the oscillations can be obtained through the output F with conventional devices

### EXAMPLE

Following the above mentioned distinctive features of the present invention, one of the ways to implement it is shown below, not being this in any manner limitative of its scope.

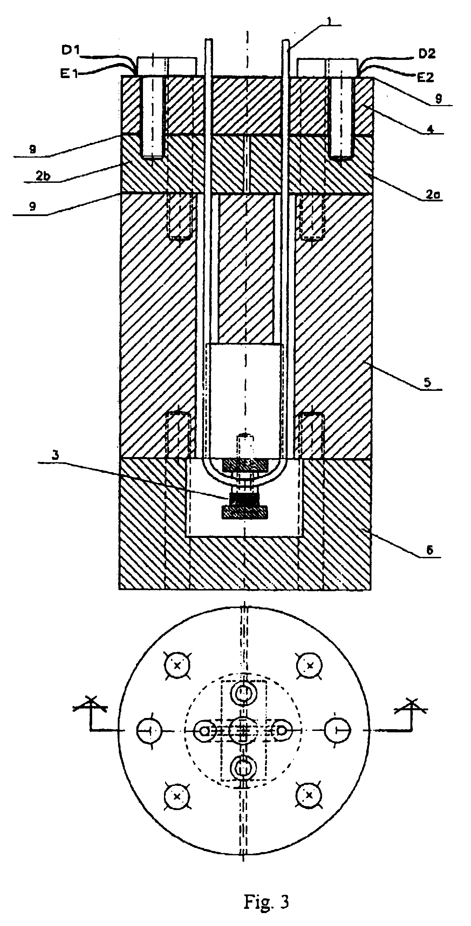

In Figure 3 a section along the tube plane and the corresponding plant can be observed, these representations describe unequivocally the mechanical part of the apparatus. In this Figure 3, it is represented a metallic or metalliced "U" shaped tube (1), with the ends soldered to two rigid blacks electrically isolated (2a y 2b) through which the excitation and the detection of the vibrations is produced by the cables D1, D2, E1 and D2 firmly attached to the blocks trough screws. In order to rigidize the system, another piece (4), metallic in this exempla, compress 2a and 2b against a cylindrical metallic block (5), acting at the same time as an upper cover. Because it can not have electrical contact between the two ends of the tube, the corresponding insulating material has been used (9). The cylinder (5) is closed at the bottom with part (6). In the bottom it is fixed a magnet (3) via an iron part that is screwed to the block (4), with a geometry that allows the vibrating part of the tube to cross perpendicularly the line forces of the magnetic field and being its plane in the zone of maximum magnetic flow.

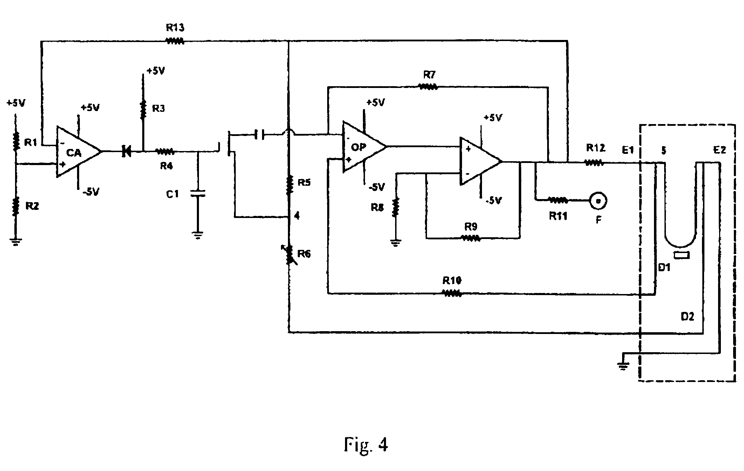

In order to produce the in-phase current capable to sustain the oscillation the amplification of the EMF has been accomplished with two coupled operational amplifiers (Figure 4): the first one with high gain and low noise, and the other a power amplifier. The latter will generate the excitation current. The amplitude control has been already explained in the previous section. In Figure 4 can be observed clearly how the effects of the length of the cables between the electronics and the mechanical part are eliminated which permits to separate to arbitrary distances these two parts and even to introduce all the cylindrical block in a liquid medium..

In this example, that is only a specific way of making the invention, the tube (vibrant part) can be filled with an homogeneous sample for its determination of mass or density, or it can be used to determine the quantity of absorbed mass in its vibrant part in both inside or outside. The tube represented in the figures can have different geometry, can be cover with other materials or even other materials can be sticked to it.

## Claims

1. Apparatus for the determination of mass and density and characterised by having a metallic or metalized tube, electrically conductive in all its length, with a non-vibrant part and another vibrant part that does not carry additional excitement elements or vibrating detectors and furthermore said apparatus accomplishes simultaneously the excitement and the detection of the oscillations of the vibrant part through cables or connectors connected to the non vibrant part of the tube.

2. Apparatus for the determination of mass and density according to claim 1, characterised by having the two ends of the tube fixed to two electrically insulated metallic parts (2a and 2b) which accomplish the excitation and detection of the vibrations thorough these two parts by using the cables E1, E2, D1 and D2, and being 2a and 2b compressed by another part ( 4) and acting the assemble as the cover of a body 5 which has a permanent magnet on the bottom and resulting in a rigid structure which has been designed to present the minimum free space and to be sealed.

3. Apparatus for the determination of mass and density according to claims 1 and 2, characterised because the pieces 2a, 2b and 4 can be replaced by a non-electrically conducting one, being the cables E1, E2, D1 and D2 directly attached to the non vibrant part of the tube.

4. Apparatus for the determination of mash and density according to claims 1 to 3, characterised by having an oscillating circuit where the vibrant tube is one arm of a Wheatstone bridge that is balanced to achieve only the electromotive force generated by the vibration of the tube in the presence of the magnetic field between 4 and 5 (Figure 2), getting in this way that the circuit amplifies only this EMF, which is used to feed the bridge and therefore the vibrant element achieving a positive feedback to sustain the vibration.

5. Apparatus for the determination of mass and density according to claims 1 to 4, characterised by a control of amplitude that allows at all times to maintain the vibration of the non vibrant part of the tube with a constant sinusoidal amplitude.

6. Apparatus for the determination of mass and density according to claims 1 to 5, characterised because the mass and density measure of homogenous samples can be done by filling the tube with this samples.

7. Apparatus for the determination of mass and density according to claims 1 to 6, characterised because It allows to determine the quantity of absorbed mass in the inside of the non-vibrant part of the tube as well as in its outside part, or even in filters or membranes placed in the inside of the non-vibrant part of the tube as well as in its outside part.
